# EUROPÄISCHE PATENTSCHRIFT

(11) **EP 1 531 123 B1**
(45) Veröffentlichungstag und Bekanntmachung des Hinweises auf die Patenterteilung: **13.05.2009**
(21) Anmeldenummer: 04024798.3
(22) Anmeldetag: 19.10.2004
(51) Int. Cl.: B63B 29/16, C02F 3/02

(54) **Verfahren und Anlage zur Aufbereitung von Abwässern auf Schiffen**
Method and installation for the treatment of soiled water from ships
Méthode et installation pour traiter des eaux de déchet de bateaux

(30) Priorität: 11.11.2003 DE 10352636
(43) Veröffentlichungstag der Anmeldung: 18.05.2005
(73) Patentinhaber: Hamann AG, 21279 Hollenstedt (DE)
(72) Erfinder: Hamann, Knud, 21279 Appel (DE); Hamann, Holger, 21218 Seevetal (DE)
(74) Vertreter: Hauck Patent- und Rechtsanwälte

(56) Entgegenhaltungen:
- EP-A2- 0 999 186
- JP-A- 9 075 988
- US-A- 4 167 479
- US-A- 6 033 569

## Beschreibung

Die Erfindung bezieht sich auf ein Verfahren zum Aufbereiten von Abwässern auf Schiffen.

Es ist derzeit noch weit verbreitet, auf Schiffen anfallende Abwässer ungereinigt in das Meer zu leiten. Es ist jedoch auch bereits bekannt geworden, Abwasser einem biologischen Klärprozeß zu unterwerfen. Nachteilig hierbei ist, daß eine Anpassung an die anfallende Abwässermenge schwer zu erzielen ist, da sich Schiffsabwässer typischerweise aus unterschiedlichen Abwasserströmen zusammensetzen, die i.d.R. stark schwankende Inhaltsstoffe aufweisen. Ferner findet bei derartigen Klärprozessen kein ausreichender Nitrat-Abbau statt. Dadurch wird das geklärte Wasser unter Umständen mit untolerierbaren Mengen an Nitraten und Nitriten in das Meerwasser geleitet.

Aus DE 197 49 699 A1 ist eine biologische Kleinkläranlage bekannt geworden. Die Anlage zur Behandlung von Abwässern enthält eine Vorklärung, eine biologische Klärung und eine Nachklärung in einem einzigen Behälter. Die Vorklärkammer besteht ihrerseits aus drei Kammern. Der Zufluß erfolgt in die erste Kammer, von der das Abwasser in eine unter der ersten Kammer befindliche weitere Vorklärkammer geleitet wird, von der das Abwasser in die dritte Vorklärkammer geleitet wird, die sich neben der zweiten Vorklärkammer befindet. In der dritten Vorklärkammer ist ein Rotationstauchkörper angeordnet, mit dem bereits in dieser Kammer ein Teil der aeroben biologischen Reinigung des Abwassers erfolgt.

Aus DE 31 45 797 A1 ist eine Vorrichtung zur biologischen Abwasserreinigung bekannt geworden, bei der zur Reinigung das Abwasser mit einer Vakuumsaugung über eine Flüssigkeitsstrahlpumpe, die durch eine Treibwasserpumpe betrieben wird, zugeführt wird. Hierbei ist ein Puffertank angeordnet, in den das Abwasser zuerst gelangt und der mit der Saugseite der Flüssigkeitsstrahlpumpe verbunden ist, so daß im Puffertank ein Vakuumpolster zur Verfügung steht. Auf diese Weise soll eine Mehrfachbenutzung von Toiletten und/oder Abwassersammelstellen geschaffen werden und gleichzeitig ein guter aerober Abbau der Schmutzfracht gewährleistet sein.

Aus DE 295 17 891 U1 ist eine transportable Kompaktkläranlage bekannt geworden, die in einem Container in Baustahl-Schweißkonstruktion eingebaut ist. Sie enthält einen zweistufigen Bioreaktor. Der im Belebungsverfahren arbeitende Bioreaktor ist über eine Zwischenklärung mit einem zwangsbelüftete Festbettkaskaden enthaltenden Schwachlastreaktor verbunden. Der Überschußschlamm wird aus dem Nachklärer einem Hochlastbecken zugeführt, das dem Bioreaktor vorgeschaltet ist. Der Überschußschlammaustrag aus dem Schlammzwischenkreis zwischen der Zwischenklärung und dem Hochlastbecken erfolgt zu einem belüfteten Schlammstabilisierungsbecken/Schlammspeicher.

In der DE 42 07 077 C2 ist eine Kompaktkläranlage mit einem Schlammrückführelement beschrieben. Ein viereckiges Becken ist in ein Vorklärbecken, ein Belebungsbecken mit Tauchbelüfter und ein Nachklärbecken aufgeteilt. Es ist mindestens eine Flüssigkeitsüberlaufvorrichtung zwischen Belebungsbecken und Nachklärbecken vorgesehen. Im Belebungsbecken sind am Boden im Abstand vom horizontalen Rückführspalt schräg gegeneinander versetzte Leitelemente im Abstand voneinander und über die Breite des Beckens verteilt angeordnet. Am unteren Ende der Trennwand zwischen Belebungsbecken und Nachklärbecken oberhalb des Spaltes ist ein sich horizontal über die Beckenbreite erstreckendes, schräg nach unten in das Belebungsbecken gerichtetes Leitelement vorhanden.

Aus DE 42 21 867 C2 sind ein Verfahren und eine Anlage zur biologischen Abwasserreinigung durch gezielte Denitrifikation bekannt geworden. Der als Überschußschlamm entnommene Belebtschlamm wird durch ein mechanisches Zellwandaufschlußverfahren zum Desintegrationsprodukt desintegriert und damit zu einer internen Kohlenwasserstoffquelle aufbereitet und gezielt zur Denitrifikation zudosiert. Durch permanente Kreislaufführung wird der gesamte, biologisch abbaubare, organische Kohlenstoff des Abwassers in die Gasphase überführt.

Aus EP 0 501 355 A1 ist ein Verfahren zur anaeroben Wasserbehandlung, insbesondere zur mikrobiellen Nitrateliminierung aus Trinkwasser bekannt geworden. Das zu behandelnde Rohwasser wird nacheinander über zwei in Reihe geschaltete Wirbelschichtreaktoren geleitet und im Betriebszustand mit Biomasse bewachsenes Trägermaterial jeweils von einer Reaktorstufe in die nachfolgende Reaktorstufe transportiert. Das Trägermaterial wird mit dem aus dem letzten Reaktor abgehenden Wasserstrom in eine Trenneinheit geleitet, aus der das abgetrennte Trägermaterial in die erste Reaktorstufe rückgeführt wird. Entsprechend dem Druckverlust in den einzelnen Reaktorstufen kann das zu behandelnde Wasser über höhengestaffelte Reaktorstufen geleitet werden.

Aus US 6 033 569 ist ein Verfahren und eine Anlage zum biologischen Entfernen von Stickstoff aus Abwässern bekannt geworden, das Ammoniumnitrat oder dergleichen aufweist. Bei dem bekannten Verfahren erfolgt auf dem Wege der Umkehrosmose eine Verdickung des Wassers, wobei das verdickte Wasser einem Behälter zugeführt wird, indem mit Hilfe von Bakterien eine Nitrifizierung des Abwassers stattfindet. Im Überlauf gelangt das Abwasser in einen Denitrifizierbehälter, indem eine Umwälzung des Abwasser erfolgt. Ein Teil des denitrifizierten Abwassers gelangt mit Hilfe einer Pumpe zurück in den ersten Behälter. Das mehr oder weniger geklärte Wasser gelangt zu einem Sedimentationstank, aus dem der Schlamm entfernt wird, während das klare Wasser einer erneuten Verdickung zugeführt wird oder wahlweise zurück in den Denitrifizierbehälter.

Der Erfindung liegt die Aufgabe zugrunde, ein Verfahren zum Aufbereiten von Abwässern auf Schiffen anzugeben, bei dem ein biologischer Klärprozeß stattfindet und zugleich eine Beseitigung von Nitraten aus dem geklärten Abwasser bei größtmöglicher Anpassung an die auf einem Schiff vorhandenen Platzverhältnisse. Ferner soll die Menge des anfallenden Klärschlamms, der einer weiteren Bearbeitung bzw. Entsorgung zugeführt werden muß, deutlich reduziert werden.

Diese Aufgabe wird durch die Merkmale des Patentanspruchs 1 gelöst.

Bei dem erfindungsgemäßen Verfahren wird Abwasser durch Oberflächenfiltration vorgereinigt. Dies geschieht etwa dadurch, daß Abwasser unter Druck durch ein Sieb, ein Filtertuch oder dergleichen gedrückt wird, wodurch grobe Feststoffteilchen, wie z.B. Haare, Fasern, Plastikteilchen und grobe Feststoffe entfernt werden. Der Filterkuchen kann anschließend in geeigneter Weise entsorgt werden, beispielsweise durch Verbrennung. Filtervorrichtungen zur Durchführung dieses Verfahrensschrittes sind bekannt. Anschließend wird das vorgereinigte Abwasser in einen als Puffer dienenden ersten Tank geleitet. Dieser hat ein Volumen, das vorzugsweise etwa die vierfache Menge Abwasser aufnehmen kann, die maximal pro Stunde zufließt. Diesem Tank kann daher kontinuierlich das Abwasser aus verschiedenen Sektionen des Schiffes zugeleitet werden. In diesem Tank findet eine Vermischung unterschiedlicher Abwässer, insbesondere des "Greywater" und des "Black water" auf einem Schiff statt. Unter "Greywater" versteht man etwa die Summe der Abwässer, die aus den Bereichen Küche, Reinigung und Unterkünfte (ohne Toilettenabwässer) kommen. "Black water" sind solche Abwässer, die aus dem Toilettenbereich sowie dem Krankenrevier kommen. In diesem ersten Tank findet vorzugsweise eine Belüftung und somit eine Sauerstoffanreicherung und gleichzeitige turbulente Durchmischung statt.

Aus dem ersten Tank wird das Abwasser kontinuierlich einem Bioreaktor zugeführt. Der Bioreaktor weist einen zweiten Tank auf, in dem eine aerobe Abwasserbehandlung stattfindet. Bekanntlich versteht man hierunter die Verminderung der Schmutzbelastung eines Abwassers durch aeroben Abbau von organischen Inhaltsstoffen mit Hilfe von Mikromechanismen und Kleinlebewesen (belebter Schlamm) mit dem Ziel einer weitgehenden Reduzierung der sauerstoff-zehrenden Inhaltsstoffe. Organische Substanzen werden durch die im Abbau beteiligten Organismen unter Bildung von Kohlendioxid, Wasser, Nitraten und Sulfaten metabolisiert. Für die Förderung der aeroben Abwasserbehandlung können z.B. Oberflächenbelüfter, Volumenbelüfter oder sonstige Mittel zur Zwangsbelüftung vorgesehen werden.

Im nächsten Schritt wird chargenweise ein dritter Tank mit dem Abwasser aus dem zweiten Tank befüllt. Der dritte Tank ist abgeschlossen und dient der Denitrifikation. Hierunter versteht man bekanntlich die Reduzierung von Nitrat und Nitrit im Abwasser unter anaeroben Bedingungen. Die Denitrifikation findet zeitgleich mit der Sedimentation der Feststoffe statt und wird solange durchgeführt, bis das Abwasser eine ausreichende Klarheit hat. Daher kann nach einer Ausgestaltung der Erfindung ein Trübungsmesser vorgesehen werden, der feststellt, wann die Trübung einen Mindestwert erreicht.

Danach wird das Sediment oder der Schlamm aus dem dritten Tank in den ersten Tank zurückgeführt. Die jeweilige Charge für den dritten Tank entspricht in ihrer Menge vorzugsweise dem Dreifachen einer Menge, die pro Stunde in den zweiten Tank gefördert worden ist. Um dies festzustellen, kann am zweiten Tank eine Füllstandsmessung angeordnet werden. Durch die regelmäßige Rückführung des im dritten Tank absedimentierten Schlammes, der reich an denitrifizierenden Bakterien ist, erfolgt eine "Beimpfung" des ersten Tanks. Die relativ hohen Sauerstoffkonzentrationen bewirken jedoch eine deutliche Reduzierung der anaeroben Bakterien (Denitrifizierer) innerhalb weniger Stunden. Nur durch die regelmäßig wiederkehrende "Beimpfung" des ersten Tanks kann es erreicht werden, daß bereits hier eine Mischpopulation von Bakterien erzeugt wird, die im weiteren Verfahrensablauf sowohl ein starkes Wachstum der aeroben Bakterien (bewirken intensiven Abbau organischer Bestandteile) als auch ausreichende Dichten von anaeroben Bakterien (Denitrifizierer) entstehen können.

Das relativ klare Wasser aus dem dritten Tank wird in einen Absetztank überführt und von dort nach einer Desinfektion, beispielsweise auf chemischem Wege, noch einmal feinfiltriert, bevor es in das Meerwasser geleitet wird.

Das erfindungsgemäße Verfahren führt auf einfache Weise zu einem Abwasser, das von organischen Bestandteilen und Stickstoffverbindungen weitgehend gereinigt ist und dadurch den Forderungen nach sauberem Wasser nachkommt.

Nach einer Ausgestaltung der Erfindung ist vorgesehen, daß dem Wasser vor dem Eintritt in den Absetzbehälter Flockungsmittel zudosiert wird. Das so entstehende Sediment (Überschußschlamm) entspricht i.d.R. <5% des Volumenstroms und wird auf an sich bekannte Art und Weise entsorgt.

Eine Anlage zur Durchführung der Erfindung kann teilweise auf Behälter, die ohnehin auf einem Schiff vorhanden sind, zurückgreifen. Dies betrifft insbesondere die Tanks oder Behälter zum Mischen und für die aerobe Abwasserbehandlung. Die übrigen Behälter müssen zusätzlich auf dem Schiff installiert werden. Um die freie Oberfläche im Behälter für die Denitrifikation möglichst gering zu halten und ein vollständiges Befüllen sowie eine optimierte Sedimentation zu erreichen, ist sowohl der Boden als auch die Decke trichterförmig gestaltet.

Die Feinfiltration ist vorzugsweise eine Membranfiltration, welche ebenfalls mit an sich bekannten Mitteln durchgeführt werden kann. Ein besonderer Vorteil der Erfindung ist in diesem Zusammenhang, daß die Feinfiltration nur mit einer sehr geringen Menge an Feststoffen befrachtet wird, was zu langen Standzeiten der Filtermodule sowie zu einer Verringerung des Wartungsaufwands führt. Ferner entspricht die benötigte Gesamttankkapazität der Erfindung lediglich dem regulären Abwasservolumen eines Tages (24 Std.), da ein kontinuierlicher Zulauf zur Behandlungsanlage erfolgen kann und große Pufferbehälter bzw. Sammeltanks nicht erforderlich sind, wie sie derzeit üblicherweise in der Schiffahrt verwendet werden. Die Größe der erfindungsgemäßen Anlage kann daher klein gehalten werden, was den naturgemäß beengten Raumverhältnissen auf Schiffen entgegenkommt.

Ein Ausführungsbeispiel zur Durchführung des erfindungsgemäßen Verfahrens ist in einem Verfahrensschema wiedergegeben.

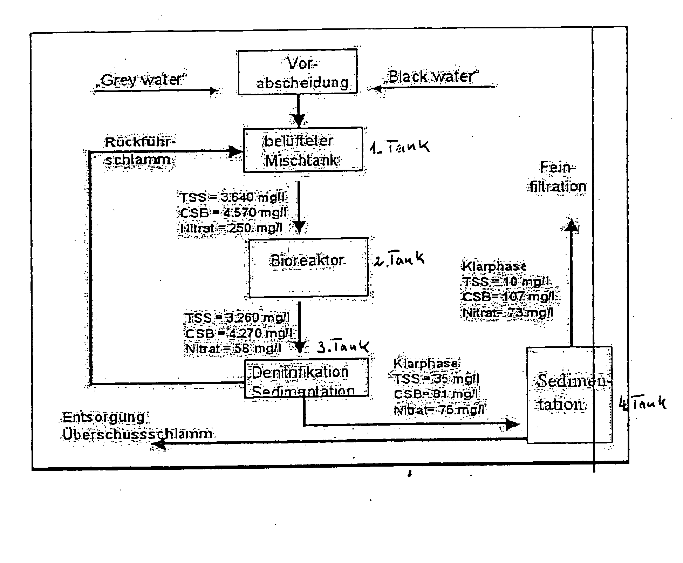

Die einzige Figur zeigt das Schema einer Anlage zur Durchführung des erfindungsgemäßen Verfahrens mit typischen Angaben zu Gehalten an TSS, CSB und Nitrat (jeweils in mg/l) ermittelt als Langzeitmittelwert der Meßperiode vom 16.09.2003 bis 19.09.2003. Hierbei bedeutet TSS Total Suspended Solids und CSB Chemischer Sauerstoff-Bedarf. Die Verfahrensstufen ergeben sich aus dem Schema, ohne daß es noch einer weiteren Erläuterung bedarf.

## Patentansprüche

1. Verfahren zur Aufbereitung von Abwässern auf Schiffen, mit den folgenden Schritten:
- das Abwasser wird durch Oberflächenfiltration vorgereinigt,
- das vorgereinigte Abwasser wird in einem ersten als Mischtank dienenden Behälter gesammelt und gegebenenfalls mit Sauerstoff angereichert,
- das Abwasser aus dem ersten Tank wird kontinuierlich einem Bioreaktor zugeführt, in dem
- in einem zweiten Tank eine aerobe Abwasserbehandlung erfolgt,
- einem dritten abgeschlossenen Tank chargenweise Abwasser aus dem zweiten Tank zugeführt wird, in dem eine Denitrifikation erfolgt, wobei Wasser aus dem dritten Tank in einen als Absetzbehälter dienenden vierten Tank geleitet wird und
- der Schlamm aus dem dritten Tank wird in regelmäßigen Abständen chargenweise in den ersten Tank rückgeführt und
- nach einer Desinfektion wird das Wasser aus dem vierten Tank einer Feinfiltration unterworfen.

2. Verfahren nach Anspruch 1, **dadurch gekennzeichnet, daß** in dem dritten Tank die Trübung des Wassers gemessen und der größte Teil des im dritten Tank abgesetzten Schlamms in den ersten Tank rückgeführt wird, und durch die Ansteuerung eines Trübungssensors nur die Klarphase in den vierten Tank überführt wird.

3. Verfahren nach einem der Ansprüche 1 oder 2, **dadurch gekennzeichnet, daß** die in den dritten Tank eingegebene Charge etwa der dreifachen Menge Abwasser entspricht, die dem zweiten Tank pro Stunde zugeführt worden ist.

4. Verfahren nach einem der Ansprüche 1 bis 3, **dadurch gekennzeichnet, daß** dem Abwasser vor dem Eintritt in den vierten Tank ein Flockungsmittel zudosiert wird.

5. Verfahren nach einem der Ansprüche 1 bis 4, **dadurch gekennzeichnet, daß** die Feinfiltration eine Membranfiltration ist.

6. Verfahren nach einem der Ansprüche 1 bis 5, **dadurch gekennzeichnet, daß** weniger als 5% des behandelten Volumenstromes in Form von Überschußschlamm entsorgt wird.

7. Anlage zur Aufbereitung von Abwässern auf Schiffen, **gekennzeichnet durch** folgende Merkmale:
- eine Filtervorrichtung zur Oberflächenfiltration des Abwassers,
- ein mit dem Abwasserablauf der Filtervorrichtung verbundener erster Tank für das Abwasser aus der Filtervorrichtung mit Mitteln zur Belüftung und/oder Mischen des Abwassers,
- ein zweiter Tank, in den Abwasser aus dem ersten Tank mit Hilfe einer Pumpe gefördert wird, wobei der zweite Tank Mittel zur Belüftung aufweist,
- ein luftabgeschlossener dritten Tank, der über eine zweite Pumpe mit dem zweitenTank verbunden ist zum chargenweisen Transport von Abwasser aus dem zweiten in den dritten Tank,
- eine eine Schlammpumpe aufweisende Rückführleitung vom dritten zum ersten Tank,
- ein Absetztank, der über einen Überlauf oder eine Förderleitung mit dem dritten Tank verbunden ist und
- eine Vorrichtung zur Feinfiltration.

8. Anlage nach Anspruch 7, **dadurch gekennzeichnet, daß** der dritte Tank einen trichterförmigen Boden und eine trichterförmige Decke aufweist.

9. Anlage nach Anspruch 7 oder 8, **dadurch gekennzeichnet, daß** der Absetztank einen trichterförmigen Boden und eine trichterförmige Decke aufweist.

## Claims

1. A method for the treatment of waste waters on ships, with the following steps:
• the waste water is pre-purified by surface filtration,
• the pre-purified waste water is collected in a first container serving as a mixing tank, and if need be enriched with oxygen,
• the waste water from the first tank is continuously supplied to a bioreactor, in which
• an aerobical water treatment takes place in a second tank,
• waste water is supplied in batches from the second tank to a third closed tank, in which a denitrification takes place, wherein water from the third tank is guided into a fourth tank serving as a sedimentation container, and
• the sludge from the third tank is recycled in batches into the first tank in regular intervals, and
• after a disinfection, the water from the fourth tank is subjected to a polishing filtration.

2. A method according to claim 1, **characterised in that** the turbidity of the water is measured in the third tank, and the greatest part of the sludge settled out in the third tank is recycled into the first tank, and only the clear phase is transferred into the fourth tank through the controlling action of a turbidity sensor.

3. A method according to any one of claims 1 or 2, **characterised in that** the batch fed into the third tank is equivalent to about three times the amount of waste water which had been supplied to the second tank per hour.

4. A method according to any one of claims 1 to 3, **characterised in that** a flocculating agent is incorporated into the waste water before it enters the fourth tank.

5. A method according to any one of claims 1 to 4, **characterised in that** the polishing filtration is a membrane filtration.

6. A method according to any one of claims 1 to 5, **characterised in that** less than 5% of the treated volume flow is disposed in the form of excess sludge.

7. An installation for the treatment of waste waters on ships, **characterised by** the following features:
• a filtering device for the surface filtration of the waste water,
• a first tank for the waste water from the filtering device, connected to the waste water effluent outlet of the filtering device, with means for the aeration and/or the mixing of the effluent water,
• a second tank into which waste water from the first tank is conveyed with the aid of a pump, wherein the second tank features means for aeration,
• an air-excluded third tank, which is connected via a second pump to the second tank for batchwise transportation of waste water from the second into the third tank,
• a recycling line from the third to the first tank, featuring a sludge pump,
• a sedimentation tank, which is connected to the third tank via an overflow or a conveying line, and
• a device for polishing filtration.

8. An installation according to claim 7, **characterised in that** the third tank features a funnel shaped bottom and a funnel shaped ceiling.

9. An installation according to claim 7 or 8, **characterised in that** the sedimentation tank features a funnel-shaped bottom and a funnel shaped ceiling.

## Revendications

1. Méthode pour traiter des eaux de déchet sur des bateaux, avec les étapes suivantes:
• l'eau de déchet est prépurifié par filtration superficielle,
• l'eau de déchet prépurifiée est accumulée dans un premier vaisseau servant comme réservoir de mélange, et si c'est nécessaire enrichi avec de l'oxygène,
• l'eau de déchet du premier réservoir est conduit de façon continue à un bioréacteur, dans lequel
• un traitement aérobique de l'eau de déchet prend place dans un deuxième réservoir,
• de l'eau de déchet du deuxième réservoir est conduit par charges successives à un troisième réservoir renfermé, dans lequel une dénitrification prend place, de l'eau du troisième réservoir étant conduit à un quatrième réservoir servant comme un vaisseau de sédimentation, et
• la boue du troisième réservoir est recyclée par charges successives au premier réservoir dans des intervalles réguliers, et
• après une désinfection, l'eau du quatrième réservoir est soumis à une filtration fine.

2. Méthode selon la revendication 1, **caractérisée en ce que** la turbidité de l'eau est mesurée dans le troisième réservoir, et la plus grande part de la boue sédimentée dans le troisième réservoir est recyclée au premier réservoir, et seulement la phase claire est transférée au quatrième réservoir suivant la commande d'un détecteur de turbidité.

3. Méthode selon une des revendications 1 ou 2, **caractérisée en ce que** la charge introduite dans le troisième réservoir correspond à environ trois fois de la quantité d'eau de déchet qui a été conduite au deuxième réservoir par heure.

4. Méthode selon l'une quelconque des revendications 1 à 3, **caractérisée en ce que** un agent floculant est additionné de façon dosée à l'eau de déchet avant l'entrée dans le quatrième réservoir.

5. Méthode selon l'une quelconque des revendications 1 à 4, **caractérisée en ce que** la filtration fine est une filtration à membrane.

6. Méthode selon l'une quelconque des revendications 1 à 5, **caractérisée en ce que** moins que 5% du courant de volume traité est éliminé en forme de boue excessive.

7. Installation pour traiter des eaux de déchet sur des bateaux, **caractérisée par** les caractéristiques suivants:
• un dispositif de filtration pour la filtration superficielle de l'eau de déchet.
• un premier réservoir raccordé à l'orifice de sortie d'eau de déchet du dispositif de filtration pour l'eau de déchet provenant du dispositif de filtration, avec des moyens pour l'aération et/ou le mélange de l'eau de déchet.,
• un deuxième réservoir auquel de l'eau de déchet provenant du premier réservoir est envoyé avec l'aide d'une pompe, le deuxième réservoir ayant des moyens pour l'aération,
• un troisième réservoir à l'abri de l'air, qui est raccordé avec le deuxième réservoir via une deuxième pompe pour la transportation d'eau de déchet du deuxième réservoir au troisième réservoir par charges successives,
• une conduite de retour du troisième au premier réservoir ayant une pompe de boue,
• un réservoir de sédimentation, qui est raccordé au troisième réservoir via un déversoir ou une conduite de refoulement, et
• un dispositif pour la filtration fine.

8. Installation selon la revendication 7, **caractérisée en ce que** le troisième réservoir présente un fond en forme de cône et un plafond en forme de cône.

9. Installation selon la revendication 7 ou 8, **caractérisée en ce que** le réservoir de sédimentation présente un fond en forme de cône et un plafond en forme de cône.
